# EUROPÄISCHE PATENTSCHRIFT

(11) **EP 2 201 430 B1**
(45) Veröffentlichungstag und Bekanntmachung des Hinweises auf die Patenterteilung: **20.04.2016**
(21) Anmeldenummer: 08804472.2
(22) Anmeldetag: 19.09.2008
(51) Int. Cl.: G05B 13/02, G05B 23/02

(54) **VERFAHREN ZUR ANALYSE DES BETRIEBS EINER GASTURBINE**
METHOD FOR ANALYSING THE OPERATION OF A GAS TURBINE
PROCÉDÉ D'ANALYSE DU FONCTIONNEMENT D'UNE TURBINE À GAZ

(30) Priorität: 26.10.2007 EP 07021041
(43) Veröffentlichungstag der Anmeldung: 30.06.2010
(73) Patentinhaber: Siemens Aktiengesellschaft, 80333 München (DE)
(72) Erfinder: PFEIFER, Uwe, 12557 Berlin (DE); STERZING, Volkmar, 85579 Neubiberg (DE)
(86) Internationale Anmeldenummer: PCT/EP2008/062538
(87) Internationale Veröffentlichungsnummer: WO 2009/053183

(56) Entgegenhaltungen:
- EP-A- 1 521 152
- WO-A-02/03041
- DE-A1- 4 012 278
- DE-A1-102006 048 730
- DE-B3-102006 004 516
- US-A1- 2002 013 664
- US-B2- 7 027 953

## Beschreibung

Die Erfindung betrifft ein Verfahren zur Analyse des Betriebs einer Gasturbine sowie ein Verfahren zur Überwachung des Betriebs einer Gasturbine.

Moderne Gasturbinen für Energieerzeugungs- und Industrieanwendungen sowie für Flugtriebwerke umfassen meist mehrstufige Axialverdichter, welche während des Betriebs vielfältigen Verschleiß-, Verschmutzungs- und anderen Schädigungsmechanismen unterliegen, welche die Funktion des Verdichters beeinträchtigen. Die rechtzeitige Erkennung solcher vom Normalzustand abweichender Maschinenzustände bildet eine wesentliche Voraussetzung zur Einleitung vorbeugender Instandhaltungsmaßnahmen, um sowohl kritische Betriebszustände als auch unzulässigen Verschleiß zu vermeiden.

Bei der Diagnose und Überwachung moderner Gasturbinen ist eine eindeutige Klassifikation und Quantifizierung von Verschleiß und Schädigungen besonders wichtig. Insbesondere ist es wünschenswert, dass bei Gasturbinen mit mehrstufigen Axialverdichtern genau angegeben werden kann, bei welcher Verdichtungsstufe das Verschleiß- bzw. Schädigungsmerkmal auftritt und wie stark bzw. wie weit fortgeschritten die Schädigung bezüglich eines festgelegten Grenzwerts ist. Darüber hinaus sollten Diagnose- und Überwachungsverfahren für Gasturbinen während des laufenden Normalbetriebs durchführbar sein und keinen Stillstand der Turbine erforderlich machen.

Aus dem Stand der Technik sind verschiedene Diagnose- und Überwachungsverfahren für Turbinen bekannt. Beispielsweise offenbart die DE 40 12 278 A1 ein Zustands-Diagnosesystem für eine Dampfturbinenanlage mit einem neuronalen Netzwerkmodell. Mit Hilfe des Modells kann das System mehrere Informationsmuster über betriebzustandsabhängige Schwingungen im Vorhinein erlernen, um bei deren Auftreten ein den Betriebszustand angebendes Ausgangssignal zu erzeugen. Dazu werden die Wellenformen mechanischer oder akustischer Schwingungen, Vibrationen oder elektromagnetische Schwingungen verwendet und verarbeitet.

Daneben ist aus der US 2002/0013664 A1 eine Güte bzw. Klassifizierungs-Einteilung zur Überwachung von drehenden Komponenten anhand von Maschinenzuständen bekannt. Als eine der möglichen Eingangsgrößen können dabei Druckpulsationen von Kompressorluft herangezogen werden. Ein weiteres Verfahren ist aus der US 7,027,953 B2 bekannt.

Diese Verfahren, wie beispielsweise das der US 7,027,953 B2, bei der für jede zu beobachtende Verdichterstufe Drucksensoren eingesetzt werden, erfordern einen sehr großen Instrumentisierungsbedarf in der Form einer großen Anzahl von Sensoren und sie können nur schwerwiegende Schäden, wie z.B. den Verlust einer Schaufel, detektieren. Darüber hinaus können solche Verfahren bei Verwendung in Gasturbinen mit mehrstufigen Axialverdichtern die Schäden nicht genau einer Verdichterstufe zuordnen.

Aufgabe der Erfindung ist es, ein Verfahren zur Analyse und Überwachung des Betriebs einer Gasturbine zu schaffen, welches mit wenigen Sensoren eine genaue Diagnose von Verschleiß und Schädigungen der Turbine ermöglicht.

Diese Aufgabe wird durch die unabhängigen Patentansprüche gelöst. Weiterbildungen der Erfindung sind in den abhängigen Ansprüchen definiert.

Gemäß dem Verfahren der Erfindung werden basierend auf dem Normalbetrieb der Gasturbine ein oder mehrere neuronale Netze gelernt. Dabei wird zunächst ein dynamisches Drucksignal durch wenigstens einen Drucksensor im oder am bzw. hinter dem Verdichter der Turbine gemessen, wobei dynamisches Drucksignal bedeutet, dass die zeitliche Veränderung des Drucksignals erfasst wird. Bevorzugte Abtastraten zur Erfassung des Drucksignals liegen im kHz-Bereich. Die Druckänderungen im Verdichter entstehen dabei durch das Passieren, d. h. das Vorbeilaufen der Laufschaufeln an den Leitschaufeln, was zu entsprechenden Druckschwankungen in der verdichteten Luft führt. Neben diesem dynamischen Drucksignal werden ferner ein oder mehrere Betriebsparameter der Gasturbine durch weitere Sensoren gemessen. Das erfindungsgemäße Verfahren kann somit während des Betriebs der Turbine durchgeführt werden. Gegebenenfalls können das dynamische Drucksignal sowie die weiteren Betriebsparameter bereits vorab erfasst worden sein und anschließend zur Verwendung im erfindungsgemäßen Verfahren eingelesen werden, z.B. aus einer Datei.

Das dynamische Drucksignal wird gemäß der Erfindung einer Frequenzanalyse unterzogen, wodurch ein oder mehrere Parameter des Frequenzspektrums des Drucksignals ermittelt werden. Dabei fließt die Erkenntnis ein, dass für jede Verdichterstufe durch die Wechselwirkung der Leitschaufeln und der Laufschaufeln im Verdichter periodisch Druckschwankungen erzeugt werden, welche zu einem periodischen Signal führen, welches dazu verwendet werden kann, um den Normalbetrieb bzw. einen davon abweichenden Betriebszustand zu spezifizieren.

Schließlich werden basierend auf der oder den gemessenen Betriebsparametern und dem oder den Parametern des Frequenzspektrums des Drucksignals ein oder mehrere neuronale Netze gelernt, welche als Eingangsgrößen den oder die gemessenen Betriebsparameter und den oder die Parameter des Frequenzspektrums des Drucksignals umfassen und als Ausgangsgröße mindestens einen Diagnosekennwert aufweisen, welcher ein Wahrscheinlichkeitsmaß für das Vorliegen des Normalbetriebs der Gasturbine in Abhängigkeit von den Eingangsgrößen repräsentiert.

Das erfindungsgemäße Verfahren zeichnet sich dadurch aus, dass durch die Analyse eines dynamischen Drucksignals in Kombination mit neuronalen Netzen mit einer geringen Anzahl von Sensoren der Normalbetrieb eines Verdichters einer Gasturbine beschrieben werden kann. Das Verfahren ist hierbei universell auf beliebige Gasturbinen anwendbar und muss nur anfangs durch Messen von Betriebsparametern und des Drucksignals der betrachteten Gasturbine gelernt werden. Im anschließenden Überwachungsbetrieb kann dann mit den neuronalen Netzen auf einfache Weise eine Unterscheidung zwischen dem erlernten Normalbetrieb oder aber eine Abweichung davon festgestellt werden, indem die bei der Überwachung erfassten Betriebsparameter inklusive des dynamischen Drucksignals als Eingangsgrößen den neuronalen Netzen zugeführt werden.

Das erfindungsgemäße Verfahren wird für einen mehrstufigen Verdichter einer Gasturbine mit einer Anzahl von Verdichterstufen eingesetzt, wobei in diesem Fall durch die Frequenzanalyse als Parameter des Frequenzspektrums für jede Verdichterstufe ein charakteristisches Frequenzband ermittelt wird und für jedes charakteristische Frequenzband der darin enthaltene Energieanteil des Drucksignals, insbesondere als RMS-Wert (RMS = Root Mean Square), berechnet wird. Dieser Energieanteil wird dabei als Eingangsgröße für das oder die neuronalen Netze verwendet. Der RMS-Wert ist hinlänglich aus dem Stand der Technik bekannt und ergibt sich durch die Integration der den einzelnen Frequenzen zugeordneten Amplituden über die Frequenzen im Frequenzband. Das erfindungsgemäße Verfahren eignet sich somit sehr gut für mehrstufige Verdichter, da die Charakteristika der einzelnen Verdichterstufen sehr gut durch ein entsprechendes Frequenzband beschrieben werden, welches mittels der Frequenzanalyse aus dem dynamischen Drucksignal ermittelbar ist. Auf diese Weise wird die Möglichkeit geschaffen, dass spezifisch für einzelne Verdichterstufen Fehlfunktion detektiert werden können. Alternativ bzw. zusätzlich zum RMS-Wert können auch der Amplituden-Maximalwert einer Frequenzlinie oder die Amplituden-Maximalwerte mehrerer benachbarter Frequenzlinien eines charakteristischen Frequenzbandes als Eingangsgrößen verwendet werden.

Vorzugsweise werden in dem erfindungsgemäßen Verfahren sog. Radiale-Basisfunktionen-Netze (auch als RBF-Netze bezeichnet) verwendet, welche hinlänglich aus dem Stand der Technik bekannt sind. Ebenso können Weiterentwicklungen solcher Netze verwendet werden. Diese Netze umfassen eine Vielzahl von radialen Basisfunktionen, beispielsweise von Gaußfunktionen, in der versteckten Schicht, wobei die Parameter dieser Gaußfunktionen gelernt werden. In der hier beschriebenen Erfindung werden als Zielgröße der radialen Basisfunktionen die Wahrscheinlichkeit trainiert, dass eine Parameterkombination der gemessenen Betriebsparameter und des dynamischen Drucks im Normalbetrieb auftritt. In dem Dokument WO 99/48020 A2 ist die Verwendung von Radialen-Basis-Funktionen-Netzen im Zusammengang mit der Überwachung der Walzkraft in einer Stahlwalzanlage beschrieben. Die dort offenbarten Prinzipien können analog auf die erfindungsgemäße Analyse des Verdichters einer Gasturbine übertragen werden.

In einer weiteren, bevorzugten Ausführungsform des erfindungsgemäßen Verfahrens stellt der wenigstens eine Diagnosekennwert einen Konfidenzwert dar, der in einem Wertebereich zwischen 0 und 1 normiert ist und die Wahrscheinlichkeit repräsentiert, dass eine jeweilige Parameterkombination von Eingangsgrößen eine im Normalbetrieb der Gasturbine bekannte Parameterkombination ist. Auf diese Weise wird eine einfache Darstellung des Diagnosekennwerts geschaffen, wobei ein Konfidenzwert nahe 1 insbesondere anzeigt, dass der Normalbetrieb der Gasturbine vorliegt und Konfidenzwerte kleiner als 0,5 angeben, dass ungewöhnliche Parameterkombinationen aufgetreten sind, welche vermuten lassen, dass ein Fehler im Betrieb des Verdichters vorliegt.

In einer weiteren Ausgestaltung des erfindungsgemäßen Verfahrens kann als weiterer Parameter des Frequenzspektrums zum Lernen der neuronalen Netze das Verhältnis des Energieanteils eines charakteristischen Frequenzbands zu den Energieanteilen von Oberwellen des charakteristischen Frequenzbands berücksichtigt werden.

Bei der Verwendung des erfindungsgemäßen Verfahrens in mehrstufigen Verdichtern wird vorzugsweise für jede Verdichterstufe ein neuronales Netz gelernt, wobei dem jeweiligen neuronalen Netz die zu einem charakteristischen Frequenzband gehörigen Parameter des Frequenzspektrums als Eingangsgrößen zugeordnet werden. Die Zuordnung ergibt sich somit durch die charakteristische Frequenz der jeweiligen Verdichterstufe, welche sich aus der Schaufelanzahl der Verdichterstufe und der aktuellen Drehzahl der Gasturbine ergibt. Dabei weist jedes neuronale Netz einen Diagnosekennwert als Ausgangsgröße auf, wobei dieser Diagnosekennwert ein Wahrscheinlichkeitsmaß für das Vorliegen des Normalbetriebs der jeweiligen Verdichterstufe in Abhängigkeit von den Eingangsgrößen repräsentiert. Auf diese Weise kann bei der Verwendung der neuronalen Netze zur Überwachung der Gasturbine detektiert werden, in welchen Verdichterstufen Fehlfunktionen vorliegen. In einer weiteren Ausgestaltung können dabei die einzelnen Diagnosekennwerte der Verdichterstufen zu einem Gesamtdiagnosekennwert -zusammengeführt werden wobei die Zusammenführung auf der Basis von bestimmten Regeln erfolgt, beispielsweise auf der Basis von Fuzzy-Regeln oder auch auf der Basis von diskreten Regeln.

In einer bevorzugten Ausführungsform des erfindungsgemäßen Verfahrens wird zur Frequenzanalyse des dynamischen Drucksignals die wenig Rechenzeit benötigende Fast-Fourier-Transformation verwendet, welche das Signal aus dem Zeitbereich in den Frequenzbereich transformiert.

Als Betriebsparameter, welche neben dem dynamischen Drucksignal gemäß der Erfindung erfasst werden, kommen insbesondere einer oder mehrere der folgenden Parameter in Betracht:
- die Drehzahl der Gasturbine;
- die Last der Gasturbine;
- der Umgebungsdruck;
- die Umgebungstemperatur;
- die Luftfeuchtigkeit;
- die Stellung der Leitschaufeln am Verdichter der Gasturbine.

Ein geeigneter Normalbetrieb, bei dem die entsprechenden Betriebsparameter und das dynamische Drucksignal ermittelt werden, ist vorzugsweise derart ausgestaltet, dass während dieses Betriebs die Gasturbine mit fester Drehzahl für unterschiedliche Lasten und/oder Stellungen der Leitschaufeln betrieben wird.

Das oben beschriebene Verfahren, mit dem neuronale Netze auf der Basis des Normalbetriebs einer Gasturbine gelernt werden, kann insbesondere als Computerprogrammprodukt realisiert werden. Dieses Computerprogrammprodukt enthält einen auf einem maschinenlesbaren Träger gespeicherten Programmcode zur Durchführung des Verfahrens, wenn das Programm auf einem Rechner abläuft.

Wie bereits im Vorangegangenen dargelegt, werden die erfindungsgemäß gelernten neuronalen Netze anschließend zur Überwachung der Gasturbine zur Feststellung von vom Normalbetrieb abweichenden Betriebszuständen verwendet. Deshalb umfasst die Erfindung auch ein Verfahren zum Überwachen einer Gasturbine basierend auf dem oder den mit dem oben beschriebenen Verfahren gelernten Netzen. Bei diesen Überwachungsverfahren werden im Wesentlichen die gleichen Größen wie in dem entsprechenden Lernverfahren gemessen. Anstatt des Lernens der neuronalen Netze werden die gemessenen Größen nunmehr den gelernten Netzen als Eingangsgrößen zugeführt und als Ergebnis erhält man den entsprechenden Diagnosekennwert, der wiedergibt, mit welcher Wahrscheinlichkeit ein Normalbetriebszustand vorliegt.

Insbesondere werden somit in dem Überwachungsverfahren während des Betriebs der Gasturbine folgende Schritte durchgeführt:
- Wenigstens ein dynamisches Drucksignal wird durch wenigstens einen Drucksensor im oder am Verdichter der Gasturbine gemessen und ferner werden ein oder mehrere Betriebsparameter der Gasturbine durch weitere Sensoren gemessen.
- Das dynamische Drucksignal wird einer Frequenzanalyse unterzogen, wodurch ein oder mehrere Parameter des Frequenzspektrums des Drucksignals ermittelt werden.
- Der oder die gemessenen Betriebsparameter und der oder die Parameter des Frequenzspektrums des Drucksignals werden als Eingangsgrößen dem oder den gelernten neuronalen Netzen zugeführt und als Ausgangsgröße des oder der neuronalen Netze wird der wenigstens eine Diagnosekennwert ausgegeben.

Gegebenenfalls kann in dem Überwachungsverfahren eine Warnung ausgegeben werden, wenn einer oder mehrere der Diagnosekennwerte außerhalb eines vorbestimmten Wertebereichs liegen, d.h. wenn durch den Diagnosekennwert angezeigt wird, dass mit hoher Wahrscheinlichkeit ein vom Normalbetrieb der Gasturbine abweichender Zustand vorliegt.

Neben dem oben beschriebenen Überwachungsverfahren umfasst die Erfindung ferner eine Vorrichtung zum Überwachen einer Gasturbine, welche derart ausgestaltet ist, dass das oben beschriebene Überwachungsverfahren durchführbar ist. Insbesondere enthält eine solche Vorrichtung folgende Komponenten:
- wenigstens einen Drucksensor zur Messung wenigstens eines dynamisches Drucksignals im oder am Verdichter der Gasturbine sowie einen oder mehrere weitere Sensoren zu Messung von einem oder mehreren Betriebsparametern der Gasturbine im Betrieb der Gasturbine;
- eine Frequenzanalyse-Einrichtung, mit der das dynamische Drucksignal einer Frequenzanalyse unterzogen werden kann, wodurch ein oder mehrere Parameter des Frequenzspektrums des Drucksignals ermittelt werden;
- das oder die gelernten neuronalen Netze, denen der oder die gemessenen Betriebsparameter und der oder die Parameter des Frequenzspektrums des Drucksignals als Eingangsgrößen zuführbar sind und welche als Ausgangsgrößen den wenigstens einen Diagnosekennwert ausgeben können.

Vorzugsweise umfasst diese Überwachungsvorrichtung ferner auch ein Mittel, mit dem das oben beschriebene Lernen der neuronalen Netze im Normalbetrieb durchgeführt werden kann.

Die Erfindung betrifft ferner eine Gasturbine, welche eine erfindungsgemäße Vorrichtung zur Überwachung der Gasturbine umfasst.

Ausführungsbeispiele der Erfindung werden nachfolgend anhand der beigefügten Figuren detailliert beschrieben.

Es zeigen:
- Fig. 1: eine schematische Darstellung eines Verfahrens zum Überwachen des Betriebs einer Gasturbine gemäß einer Ausführungsform der Erfindung;
- Fig. 2: ein Diagramm, welches die gemäß einer Ausführungsform der Erfindung ermittelten Parameter des Frequenzspektrums des dynamischen Drucksignals verdeutlicht; und
- Fig. 3: eine Darstellung, welche die zeitliche Veränderung der in einer Ausführungsform der Erfindung bestimmten RMS-Werte des Drucksignals einer Gasturbine in Abhängigkeit von sich verändernder Last und Stellung der Leitschaufeln der Gasturbine wiedergibt.

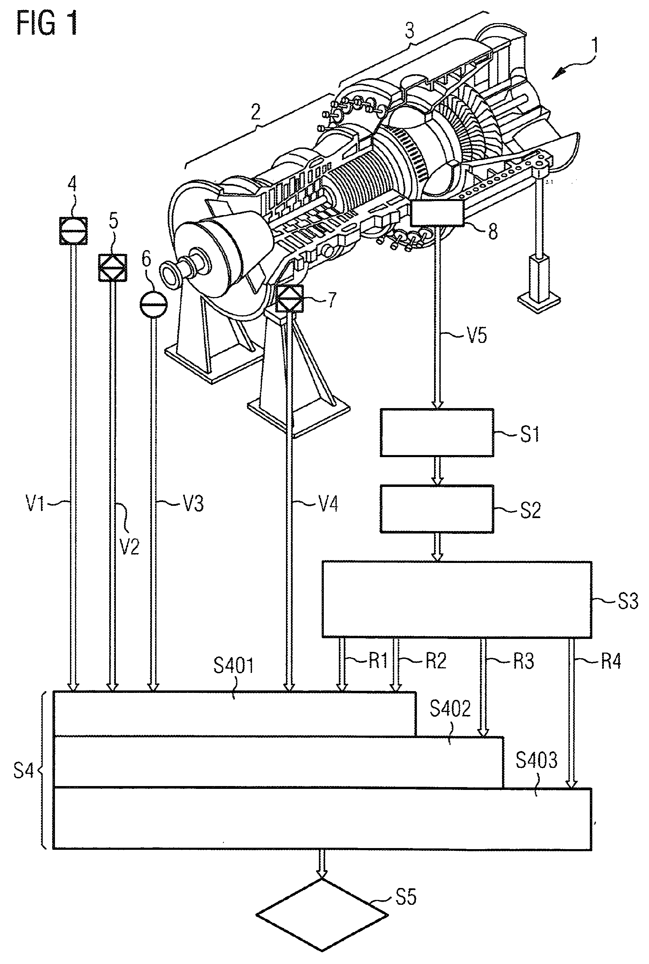

Fig. 1 zeigt ein Ablaufdiagramm, welches die wesentlichen Verfahrensschritte einer Ausführungsform eines erfindungsgemäßen Verfahrens zur Überwachung des Betriebs einer Gasturbine wiedergibt. In der Ausführungsform der Fig. 1 wird eine Gasturbine 1 überwacht, deren Aufbau an sich bekannt ist und deshalb nur kurz erläutert wird. Die Gasturbine umfasst einen mehrstufigen Axialverdichter 2 mit mehreren Laufscheiben und Leitreihen, wobei in dem Verdichter eine Vielzahl von Verdichterstufen mit Leitschaufeln und Laufschaufeln ausgebildet ist. Durch die Leitschaufel wird der Strömungswinkel der Luft im Verdichter auf die Laufschaufel eingestellt und die Laufschaufel verdichtet und pumpt die Luft weiter. An den Axialverdichter 2 schließt sich in der Turbine 3 die Brennkammer an, in der entsprechender Brennstoff mit Hilfe der über den Verdichter zugeführten Luft verbrannt wird, wodurch die Turbine angetrieben wird.

In der in Fig. 1 dargestellten Turbine ist eine Vielzahl von Sensoren vorgesehen, welche entsprechende Betriebsparameter der Turbine erfassen. Der Sensor 4 ist ein Temperatursensor, welcher die Umgebungstemperatur misst und ein entsprechendes Messsignal V1 ausgibt. Der Sensor 5 ist ein Drucksensor, der den Luftdruck der Umgebung misst und ein entsprechendes Messsignal V2 ausgibt. Durch das Bezugszeichen 6 ist ein Feuchtigkeitssensor wiedergegeben, der die Luftfeuchtigkeit misst und ein entsprechendes Messsignal V3 ausgibt. Darüber hinaus ist ein Sensor 7 vorgegeben, der am Eintritt des Verdichters die Stellung der dort vorhandenen verstellbaren Leitschaufeln misst, wobei die Stellung der Leitschaufeln in der Gasturbine über eine entsprechende Einstelleinrichtung verändert werden kann. Der Messwert der Position der Leitschaufeln ist in Fig. 1 mit V4 bezeichnet.

Schließlich ist am Auslass des Verdichters ein Drucksensor 8 vorgesehen, der dynamisch den Druck am Verdichterauslass in der Form eines Messsignals V5 misst. Dynamisch bedeutet hierbei, dass die zeitliche Veränderung des Schalldrucks mit einer entsprechenden Abtastrate ermittelt wird, so dass das zeitliche Verhalten des Drucks erfasst wird. Eine Messung ist insbesondere dann dynamisch, wenn die Abtastrate im kHz-Bereich und höher liegt. Das gemessene Drucksignal entsteht hierbei dadurch, dass in den einzelnen Verdichterstufen im Betrieb die Verdichterlaufschaufel die Leitschaufel passiert und hierdurch periodische Druckwellen in der verdichteten Luft generiert werden, wobei die Periode einer Druckwelle von der Anzahl an Leit- und Laufschaufeln in der jeweiligen Verdichterstufe abhängt. Das erfasste dynamische Drucksignal enthält somit aufgrund der Mehrzahl von Verdichterstufen mehrere periodische Anteile.

Anstatt der Verwendung eines einzelnen Drucksensors 8 können auch mehrere Drucksensoren eingesetzt werden, insbesondere können bereits vorhandene Drucksensoren, wie sie an manchen Gasturbinen im Brennerbereich zur Verbrennungsstabilitätsüberwachung eingesetzt sind, zur Messung herangezogen werden. Ansonsten bietet sich die Installation eines Drucksensors im Austrittsdiffusor oder im Verdichterluftsammelraum der Gasturbine an. Erfindungsgemäß wird das Signal V5 zunächst im Schritt S1 einer A/D-Wandlung unterzogen, und mit dem digitalisierten Signal wird schließlich in Schritt S2 eine FFT-Transformation (FFT = Fast-Fourier-Transformation) zur Ermittlung des Frequenzspektrums des Signals durchgeführt. Die in Schritt S2 durchgeführte FFT-Transformation ist dabei so fein auf die sich aus der Drehzahl der Gasturbine und der Anzahl der Leit- und Laufschaufeln ergebenden Frequenzen abgestimmt, dass die einzelnen Frequenzen klar getrennt den Verdichterstufen zugeordnet werden können. Als Ergebnis der FFT-Transformation erhält man charakteristische Frequenzbänder mit entsprechenden Amplituden der einzelnen Frequenzen.

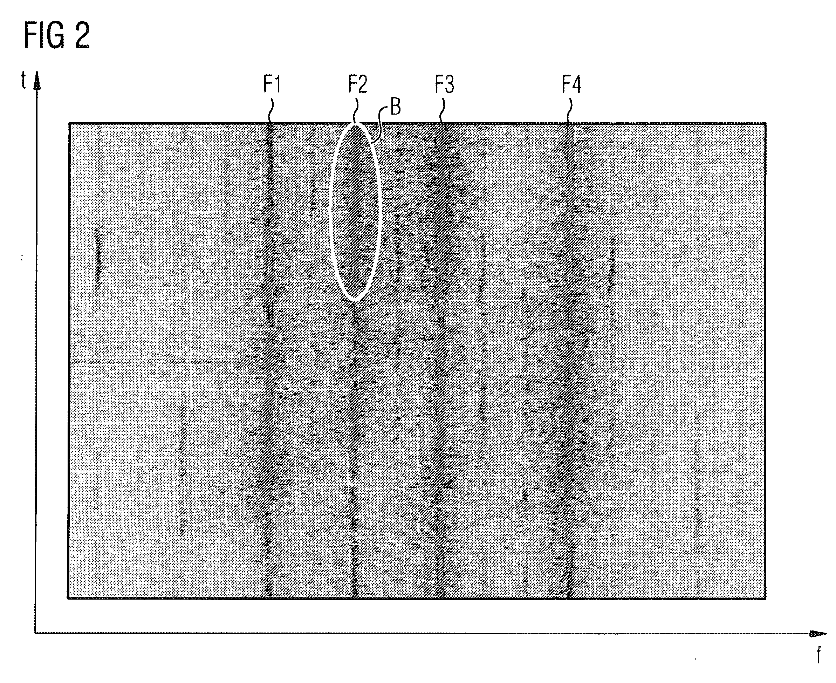

Ein derartiges Frequenzspektrum ist beispielhaft in dem Diagramm der Fig. 2 wiedergegeben. Dieses Diagramm wird auch als Campbell-Diagramm bezeichnet. Entlang der Abszisse sind hierbei die Frequenzen f in dem Drucksignal wiedergegeben und entlang der Ordinate die Zeit t. Die Amplitude der einzelnen Frequenzen ist in Fig. 2 farbcodiert, wobei aufgrund der Schwarz-Weiß-Darstellung diese Farbcodierung nicht ersichtlich ist. Üblicherweise wird die Farbe rot für die Anzeige von hohen Amplituden verwendet. Beispielhaft ist in Fig. 2 ein Bereich B markiert, in dem hohe Amplituden vorliegen. In der Darstellung der Fig. 2 wurden über die Zeit t bestimmte Betriebsgrößen der Turbine verändert. Insbesondere wurde die Last und die Stellung der Leitschaufeln des Verdichters verändert. Hieraus resultieren schließlich sich verändernde Amplituden, wobei jedoch charakteristische Frequenzbänder über die Zeit hinweg erhalten bleiben. Besonders deutlich sind in Fig. 2 dabei die Frequenzbänder F1, F2, F3 und F4 ersichtlich. Jedes der Frequenzbänder F1 bis F4 repräsentiert hierbei eine Verdichterstufe des Axialverdichters 2 der Gasturbine 1, d.h. jeder Verdichterstufe ist bei Betrieb mit einer bestimmten Drehzahl ein Frequenzband mit einer charakteristischen Frequenz zugeordnet.

Gemäß Schritt S3 der Fig. 1 erfolgt nunmehr die Auswertung der in Fig. 2 gezeigten Frequenzbänder, wobei gegebenenfalls eine Korrektur mit einem entsprechenden Modell erfolgt. In Schritt S3 wird für jedes Frequenzband durch Integration über die Frequenzen des Bandes der Energieanteil des Drucksignals im jeweiligen Frequenzband ermittelt, wobei dieser Energieanteil als sog. RMS-Wert (RMS = Root Mean Square) ausgegeben wird. Dieser RMS-Wert ist eine dem Fachmann hinlänglich bekannte Größe. Als Ergebnis des Schritts S3 erhält man somit für jede Verdichterstufe einen charakteristischen RMS-Wert, wobei in Fig. 1 beispielhaft vier RMS-Werte R1 bis R4 für vier Verdichterstufen wiedergegeben sind.

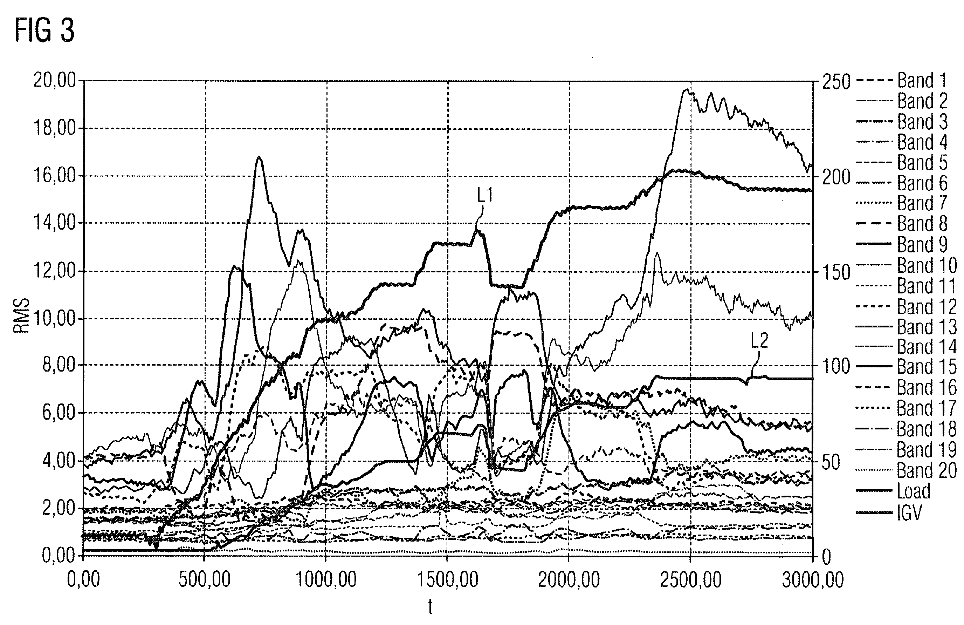

Fig. 3 verdeutlicht nochmals in einem entsprechenden Diagramm die zeitliche Entwicklung von RMS-Werten in einer Turbine mit zwanzig charakteristischen Frequenzbändern, die jeweils einer Verdichterstufe des Verdichters der Gasturbine zugeordnet sind. Entlang der Abszisse ist hierbei die Zeit in Sekunden aufgetragen und entlang der Ordinate die entsprechenden RMS-Werte der einzelnen Bänder. Das Diagramm ist ebenfalls farbcodiert, wobei jedes Band mit einer anderen Farbe dargestellt ist, was jedoch aufgrund der Schwarz-Weiß-Darstellung der Fig. 3 nicht ersichtlich wird. Die einzelnen Frequenzbänder von Band 1 bis Band 20 sind hierbei in dem Diagramm in der Legende am rechten Rand wiedergegeben. Neben den RMS-Werten enthält das Diagramm der Fig. 3 ferner die an der Turbine während des Betriebs vorgenommene Veränderung der Last und der Stellung der Leitschaufeln. Dies wird durch entsprechende Linien mit der Bezeichnung "Load" für die Last und "IGV" für die Leitschaufeln in der Legende angezeigt. Zur Kenntlichmachung des entsprechenden Verlaufs wurde die Linie der zeitlichen Veränderung der Last mit L1 und der Stellung der Leitschaufeln mit L2 bezeichnet. Die einzelnen Werte für die Last bzw. der Stellung der Leitschaufeln werden hierbei als prozentuale Werte durch die Ordinate am rechten Rand des Diagramms wiedergegeben.

Aus Fig. 3 wird zum einen ersichtlich, dass sich bei der Veränderung der Leistung, welche durch eine Veränderung des Massenstroms des Verdichters erreicht wird, sehr deutliche Antworten in den RMS-Werten selbst bei geringer Änderung des Massestroms ergeben. Andererseits wird auch deutlich, dass sich komplexe Systemantworten in Abhängigkeit des Betriebszustands ergeben können. Mit Hilfe der RMS-Werte in Kombination mit weiteren Betriebsparametern, von denen in Fig. 3 die Last und die Stellung der Leitschaufeln gezeigt sind, kann dann erfindungsgemäß auf ein anormales Verhalten der Gasturbine resp. des Verdichters geschlossen werden.

Um aus den gemessenen Betriebsparametern sowie den RMS-Werten in geeigneter Weise einen Diagnosekennwert abzuleiten, werden erfindungsgemäß neuronale Netze eingesetzt. In der hier beschriebenen Ausführungsform der Erfindung wird ein neuronales Modell vorzugsweise basierend auf radialen Basisfunktionen verwendet, welches auch als RBF-Netz bekannt ist. Der prinzipielle Aufbau solcher Netze ist hinlänglich aus dem Stand der Technik bekannt und wird deshalb an dieser Stelle nicht im Detail erläutert. Solche Netze bestehen aus einer Eingabe- und einer Ausgabeschicht und lernen die Parameter von radialen Basis-Funktionen, beispielsweise Gaußfunktionen, anhand der Eingangsgrößen in der Eingangsschicht, um hierdurch das funktionale Verhalten und die Verteilung der Eingangsgrößen zu approximieren. In der hier beschriebenen Ausführungsform wurde für jede Verdichterstufe ein entsprechendes RBF-Netz mit den Betriebsparametern sowie den entsprechenden RMS-Werten der Verdichterstufe gelernt, wobei das Lernen basierend auf Messungen im Normalbetrieb der Gasturbine durchgeführt wurde.

Die einzelnen RBF-Netze erzeugen als Ausgangsgröße einen zwischen 0 und 1 normierten Konfidenzwert, der für einen Satz an Eingangsgrößen, d.h. für zu einem bestimmten Zeitpunkt vorliegende Betriebsparameter und entsprechendem RMS-Wert, anzeigt, wie hoch die Wahrscheinlichkeit ist, dass im Normalbetrieb eine solche Kombination aus RMS-Wert und Betriebsparameter auftritt. Je höher dieser Konfidenzwert ist, desto wahrscheinlicher liegt tatsächlich ein normaler Betrieb vor. Demgegenüber bedeuten geringe Konfidenzwerte, dass mit hoher Wahrscheinlichkeit ein Fehlbetrieb in dem entsprechenden Verdichter der Gasturbine aufgetreten ist.

Die entsprechend gelernten neuronalen Netze fungieren als approximative Datenenkapsulatoren und werden in Fig. 1 im Schritt S4 mit den einzelnen Betriebsparametern gemäß den Messsignalen V1 bis V4 sowie den RMS-Werten R1 bis R4 als Eingangsgrößen gespeist. Der Schritt S4 ist beispielhaft in vier Unterschritte S401, S402 und S403 unterteilt. Im Schritt S401 werden die Betriebsparameter und die RMS-Werte R1 und R2 den jeweiligen neuronalen Netzen der entsprechenden Verdichterstufen zugeführt. In Schritt S402 wird der RMS-Wert R3 und in schritt S403 der RMS-Wert R4 dem neuronalen Netz der entsprechenden Verdichterstufe zugeführt. Als Ergebnis des Schritts S4 erhält man nunmehr für jedes neuronale Netz einen entsprechenden Konfidenzwert im Wertebereich zwischen 0 und 1. Hierbei könnte beispielsweise für einen Konfidenzwert zwischen 0,5 und 1 die Aussage abgeleitet werden, dass ein Normalbetriebszustand vorliegt, wohingegen für Konfidenzwerte kleiner als 0,5 diagnostiziert wird, dass ein Fehlbetrieb vorliegt. Diese Diagnosekennwerte werden schließlich in Schritt S5 ausgegeben. Bei der Auswahl der Betriebsparameter als Eingangsgrößen für die neuronalen Netze ist es dabei nicht notwendig, dass die einzelnen Parameter in einem eindeutigen Zusammenhang stehen. Vielmehr kann jede Verteilung von Parameterkombinationen erlernt werden, wenn ausreichend Betriebsdaten zum Training der neuronalen Modelle zur Verfügung stehen. Für eine hohe Selektivität beim Erkennen ungewöhnlicher Zustände ist es empfehlenswert, alle das System maßgeblich beeinflussenden Parameter als Eingangsgröße beim Lernen des neuronalen Netzes einzubeziehen.

Zusammenfassend werden mit dem oben beschriebenen Verfahren für charakteristische Energiewerte von Frequenzbändern jeder Verdichterstufe ein und gegebenenfalls mehrere Datenenkapsulatoren in der Form von RBF-Netzen auf einem breiten Spektrum unterschiedlicher Parameterkombinationen trainiert, wobei die trainierten Datenenkapsulatoren anschließend zur Überwachung der Gasturbine eingesetzt werden, um einen Fehlbetrieb zu detektieren. Als Parameter beim Lernen bzw. Überwachen der Gasturbine werden insbesondere die Drehzahl, die Last, die Vorleitschaufelstellung, der Luftdruck, der Umgebungsdruck, die Luftfeuchte und dergleichen betrachtet. Die Größen stellen neben den Energieamplituden der charakteristischen Frequenzen wichtige Eingangsgrößen der Datenenkapsulatoren dar. Zusätzlich kann das Verhältnis der RMS-Werte von charakteristischen Frequenzen zu deren Oberwellen in höherfrequenten Bändern einbezogen werden. Darüber hinaus können in einer Ausführungsform des erfindungsgemäßen Verfahrens die Konfidenzwerte der einzelnen Datenenkapsulatoren zusammengeführt werden. Hierdurch kann beispielsweise eine Gesamtkonfidenz für das Vorliegen eines Normalbetriebs ermittelt werden. Dies kann insbesondere auf der Basis von Fuzzy-Regeln oder diskreten Regeln erfolgen, welche bekannte Zusammenhänge für das Verhalten und Zusammenwirken einzelner Verdichterstufen ausdrücken. Im Ergebnis kann mit der hier beschriebenen Ausführungsform des erfindungsgemäßen Verfahrens auf der Basis von Messwerten einer geringen Anzahl von Drucksensoren die Güte und der Status der einzelnen Verdichterstufen des Axialverdichters einer Gasturbine diagnostiziert werden.

Mit dem erfindungsgemäßen Verfahren ergibt sich eine Reihe von Vorteilen. Insbesondere kann bereits mit einer geringen Anzahl von Drucksensoren, z.B. bereits mit einem einzigen Drucksensor, für den gesamten Verdichter der Zustand des Verdichters diagnostiziert werden, was die Gesamtkosten der Überwachung des Betriebs der Gasturbine vermindert. Darüber hinaus ist das erfindungsgemäße Verfahren einfach an verschiedene Gasturbinen anpassbar, indem spezifisch für die Gasturbine zunächst im Trainingsbetrieb die neuronalen Netze gelernt werden und anschließend auf der Basis dieser gelernten Netze die Überwachung der Gasturbine erfolgt. Darüber hinaus wird mit dem erfindungsgemäßen Verfahren eine schnelle und hochfrequente Überwachung des gesamten Verdichters einer Gasturbine während des Betriebs ermöglicht, wobei insbesondere auch Langzeitinformationen über die Laufzeit der Gasturbine ermöglicht werden. Schließlich können auch schleichende Veränderungen gegenüber dem Normalzustand der Gasturbine durch Mittelung der Konfidenzwerte über einen längeren Zeitraum erkannt werden. Hierdurch können die Instandhaltungskosten reduziert werden, da durch die erfindungsgemäße Diagnose Schäden frühzeitig detektiert werden und somit eine schadensrelevante Instandhaltung der Gasturbine durchgeführt werden kann, anstelle dass die Instandhaltung in festen Intervallen bzw. rein vorbeugend durchgeführt wird.

## Patentansprüche

1. Verfahren zur Analyse des Betriebs des mehrstufigen Verdichters (2) einer Gasturbine (1) mit einer Vielzahl von Verdichterstufen und/oder zum Überwachen einer Gasturbine (1),
bei dem ein oder mehrere neuronale Netze basierend auf dem Normalbetrieb der Gasturbine (1) gelernt werden, wobei:
- wenigstens ein dynamisches Drucksignal (V5) durch wenigstens einen Drucksensor (8) im oder am Verdichter (2) der Gasturbine (1) sowie ein oder mehrere Betriebsparameter (V1, V2, V3, V4) der Gasturbine (1) durch eine oder mehrere weitere Sensoren (4, 5, 6, 7) bei Normalbetrieb der Gasturbine (1) gemessen werden und/oder ein dynamisches Drucksignal (V5) sowie ein oder mehrere Betriebsparameter (V1, V2, V3, V4) der Gasturbine (1), welche im Normalbetrieb der Gasturbine (1) gemessen wurden, eingelesen werden;
- das dynamische Drucksignal (V5) einer Frequenzanalyse unterzogen wird, wodurch ein oder mehrere Parameter des Frequenzspektrums des Drucksignals (V5) ermittelt werden;
- basierend auf dem oder den gemessenen Betriebsparametern (V1, V2, V3, V4) und dem oder den Parametern des Frequenzspektrums des Drucksignals (V5) ein oder mehrere neuronale Netze gelernt werden, welche als Eingangsgrößen den oder die gemessenen Betriebsparameter (V1, V2, V3, V4) und den oder die Parameter des Frequenzspektrums des Drucksignals (V5) umfassen und als Ausgangsgrößen wenigstens einen Diagnosekennwert aufweisen, welcher ein Wahrscheinlichkeitsmaß für das Vorliegen des Normalbetriebe der Gasturbine (1) in Abhängigkeit von den Eingangsgrößen repräsentiert,
**dadurch gekennzeichnet, dass**
als Parameter des Frequenzspektrums für jede Verdichterstufe ein charakteristisches Frequenzband (F1, F2, F3, F4) anhand der Drehzahl der Gasturbine und der Anzahl der Leitschaufeln und Laufschaufeln der betreffenden Verdichterstufe ermittelt wird und für jedes charakteristische Frequenzband der darin enthaltene Energieanteil des Drucksignals (V5), insbesondere der Root Mean Square - Wert, und/oder das Amplituden-Maximum und/oder mehrere benachbarte Amplituden-Maxima von Frequenzlinien innerhalb des charakteristischen Frequenzbands (F1, F2, F3, F4) zur Verwendung als Eingangsgrößen des oder der neuronalen Netze berechnet werden.

2. Verfahren nach Anspruch 1,
bei dem das oder die neuronalen Netze Radiale Basis Funktions-Netze sind.

3. verfahren nach Anspruch 1 oder 2,
bei dem der wenigstens eine Diagnosekennwert ein Konfidenzwert ist, der in einem Wertebereich zwischen 0 und 1 normiert ist und die Wahrscheinlichkeit repräsentiert, dass eine jeweilige Parameterkombination von Eingangsgrößen eine im Normalbetrieb der Gasturbine (1) bekannte Parameterkombination ist.

4. Verfahren nach einem der vorhergehenden Ansprüche,
bei dem als weiterer Parameter des Frequenzspektrums ferner das Verhältnis des Energieanteils eines charakteristischen Frequenzbands (F1, F2, F3, F4) zu den Energieanteilen von Oberwellen des charakteristischen Frequenzbands (F1, F2, F3, F4) zur Verwendung als Eingangsgrößen des oder der neuronalen Netze berücksichtigt wird.

5. Verfahren nach einem der vorhergehenden Ansprüche, bei dem für jede Verdichterstufe ein neuronales Netz gelernt wird, wobei das jeweilige neuronale Netz als Eingangsgrößen zu einem charakteristischen Frequenzband (F1, F2, F3, F4) gehörigen Parameter des Frequenzspektrums umfasst und wobei jedes neuronale Netz einen Diagnosekennwert als Ausgangsgröße aufweist,
wobei dieser Diagnosekennwert ein Wahrscheinlichkeitemaß für das Vorliegen des Normalbetriebs der jeweiligen Verdichterstufe in Abhängigkeit von den Eingangsgrößen repräsensiert.

6. Verfahren nach Anspruch 5,
bei dem auf der Basis vorbestimmter Regeln, insbesondere auf der Basis von Fuzzy-Regeln, ein Gesamtdiagnosekennwert aus den Diagnoasekennwerten der jeweiligen Verdichterstufen ermittelt wird.

7. Verfahren nach einem der vorhergehenden Ansprüche, bei dem die für das dynamische Druocksignal (V5) durchgeführte Frequenzanalyse eine Fast-Fourier-transformation umfasst.

8. Verfahren nach einem der vorhergehenden Ansprüche, bei dem als Betriebsparameter (V1, V2, V3, V4) einer oder mehrere der folgenden Parameter gemessen oder eingelesen werden:
- die Drehzahl der Gasturbine (1);
- die Last der Gasturbine (1);
- der Umgebungsdruck;
- die Umgebungstemperatur;
- die Luftfeuchtigkeit;
- die Stellung der Leitschaufeln am Verdichter (2) der Gasturbine (1).

9. Verfahren nach Anspruch 8,
bei dem die gemessenen Betriebsparameter (V1, V2, V3, V4) und das dynamische Drucksignal (V5) aus einem Normalbetriebs stammen, bei dem die Gasturbine (1) mit fester Drehzahl für unterschiedliche Lasten und/oder Stellungen der Leitschaufeln betrieben wird.

10. Verfahren nach einem der Ansprüche 1 bis 9,
bei dem ein Warnsignal ausgegeben wird, wenn einer oder mehrere der Diagnosekennwerte außerhalb eines vorbestimmten Wertebereichs liegen.

11. Vorrichtung zur Durchführung des Verfahrens nach einem der Ansprüche 1 bis 10,
umfassend:
- wenigstens einen Drucksensor (8) zur Messung wenigstens eines dynamisches Drucksignals (V5) im oder am Verdichter (2) der Gasturbine (1) sowie einen oder mehrere weitere Sensoren zu Messung von einem oder mehreren Betriebsparametern (V1, V2, V3, V4) der Gasturbine (1) im Betrieb der Gasturbine (1);
- eine Frequenzanalyse-Einrichtung, mit der das dynamische Drucksignal (V5) einer Frequenzanalyse unterzogen werden kann, wodurch ein oder mehrere Parameter des Frequenzspektrum des Drucksignals (V5) ermittelt werden;
- das oder die gelernten neuronalen Netze, denen der oder die gemessenen Betriebsparameter (V1, V2, V3, V4) und der oder die Parameter des Frequenzspektrums des Drucksignals (V5) als Eingangsgrößen zuführbar sind und welche als Ausgangsgrößen den wenigstens einen Diagnosekennwert ausgeben können, welcher ein Wahrscheinlichkeitsmaß für das Vorliegen des Normalbetriebs der Gasturbine (1) in Abhängigkeit von den Eingangsgrößen repräsentiert,
**dadurch gekennzeichnet, dass**
als Parameter des Frequenzspektrums für jede Verdichterstufe ein charakteristisches Frequenzband (F1, F2, F3, F4) anhand der Drehzahl der Gasturbine und der Anzahl der Leitschaufeln und Laufschaufeln der betreffenden Verdichterstufe verwendet und für jedes charakteristische Frequenzband der darin enthaltene Energieanteil des Drucksignals (V5), insbesondere der Root Mean square - Wert, und/oder das Amplituden-Maximum und/oder mehrere benachbarte Amplituden-Maxima von Frequenzlinien innerhalb des charakteristischen Frequenzbands (F1, F2, F3, F4) zur Verwendung als Eingangsgrößen des oder der neuronalen Netze verwendet.

12. Gasturbine,
umfassend eine Vorrichtung nach Anspruch 11.

## Claims

1. Method for analysis of the operation of the multistage compressor (2) of a gas turbine (1) having a multiplicity of compressor stages and/or for monitoring a gas turbine (1),
wherein one or more neural networks is or are trained on the basis of normal operation of the gas turbine (1), wherein:
- at least one dynamic pressure signal (V5) is measured by at least one pressure sensor (8) in or on the compressor (2) of the gas turbine (1), and one or more operating parameters (V1, V2, V3, V4) of the gas turbine (1) is or are measured by one or more further sensors (4, 5, 6, 7) during normal operation of the gas turbine (1), and/or a dynamic pressure signal (V5) as well as one or more operating parameters (V1, V2, V3, V4) of the gas turbine (1), which were measured during normal operation of the gas turbine (1) are read in;
- the dynamic pressure signal (V5) is subjected to a frequency analysis, as a result of which one or more parameters of the frequency spectrum of the pressure signal (V5) is or are determined;
- one or more neural networks are trained on the basis of the measured operating parameter or parameters (V1, V2, V3, V4) and the parameter or parameters of the frequency spectrum of the pressure signal (V5), which have, as input variables, the measured operating parameter or parameters (V1, V2, V3, V4) and the parameter or parameters of the frequency spectrum of the pressure signal (V5) and, as output variables, have at least one diagnosis characteristic value, which represents a probability measure of the presence of normal operation of the gas turbine (1), as a function of the input variables,
**characterized in that**
a characteristic frequency band (F1, F2, F3, F4) is determined on the basis of the rotation speed of the gas turbine and the number of guide vanes and rotor blades in the relevant compressor stage as a parameter of the frequency spectrum for each compressor stage, and, for each characteristic frequency band, the energy component of the pressure signal (V5) contained therein, in particular the root mean square value, and/or the amplitude maximum and/or a plurality of adjacent amplitude maxima of frequency lines within the characteristic frequency band (F1, F2, F3, F4) are calculated for use as input variables for the neural network or networks.

2. Method according to Claim 1,
wherein the neural network or networks is or are radial basis function networks.

3. Method according to Claim 1 or 2,
wherein the at least one diagnosis characteristic value is a confidence value which is normalized in a value range between 0 and 1 and represents the probability that a respective parameter combination of input variables is a parameter combination known during normal operation of the gas turbine (1).

4. Method according to one of the preceding claims, wherein, furthermore, as a further parameter of the frequency spectrum, the ratio of the energy component of a characteristic frequency band (F1, F2, F3, F4) to the energy components of harmonics of the characteristic frequency band (F1, F2, F3, F4) is taken into account for use as input variables for the neural network or networks.

5. Method according to one of the preceding claims, wherein, for each compressor stage, a neural network is trained, wherein the respective neural network has, as input variables, parameters of the frequency spectrum which are associated with a characteristic frequency band (F1, F2, F3, F4) and wherein each neural network has a diagnosis characteristic value as an output variable, wherein this diagnosis characteristic value represents a probability measure for the presence of normal operation of the respective compressor stage, as a function of the input variables.

6. Method according to Claim 5,
wherein an overall diagnosis characteristic value is determined from the diagnosis characteristic values of the respective compressor stages, on the basis of predetermined rules, in particular on the basis of fuzzy rules.

7. Method according to one of the preceding claims,
wherein the frequency analysis which is carried out for the dynamic pressure signal (V5) comprises a fast Fourier transformation.

8. Method according to one of the preceding claims,
wherein one or more of the following parameters is or are measured or read in as operating parameters (V1, V2, V3, V4) :
- the rotation speed of the gas turbine (1);
- the load on the gas turbine (1);
- the ambient pressure;
- the ambient temperature;
- the air humidity;
- the position of the guide vanes on the compressor (2) in the gas turbine (1).

9. Method according to Claim 8,
wherein the measured operating parameters (V1, V2, V3, V4) and the dynamic pressure signal (V5) originate from normal operation during which the gas turbine (1) is operated at a fixed rotation speed for different loads and/or positions of the guide vanes.

10. Method according to one of Claims 1 to 9,
wherein a warning signal is output when one or more of the diagnosis characteristic values is or are outside a predetermined value range.

11. Apparatus for carrying out the method according to one of Claims 1 to 9,
comprising:
- at least one pressure sensor (8) for measurement of at least one dynamic pressure signal (V5) in or on the compressor (2) of the gas turbine (1), as well as one or more further sensors for measurement of one or more operating parameters (V1, V2, V3, V4) of the gas turbine (1) during operation of the gas turbine (1);
- a frequency analysis device, by means of which the dynamic pressure signal (V5) can be subjected to a frequency analysis, as a result of which one or more parameters of the frequency spectrum of the pressure signal (V5) is or are determined;
- the neural network or networks which has or have been trained and to which the measured operating parameter or parameters (V1, V2, V3, V4) and the parameter or parameters of the frequency spectrum of the pressure signal (V5) can be supplied as input variables, and which can output the at least one diagnosis characteristic value as output variables, which represents a probability measure of the presence of normal operation of the gas turbine (1), as a function of the input variables,
**characterized in that**
a characteristic frequency band (F1, F2, F3, F4) is used on the basis of the rotation speed of the gas turbine and the number of guide vanes and rotor blades in the relevant compressor stage as a parameter of the frequency spectrum for each compressor stage, and, for each characteristic frequency band, the energy component of the pressure signal (V5) contained therein, in particular the root mean square value, and/or the amplitude maximum and/or a plurality of adjacent amplitude maxima of frequency lines within the characteristic frequency band (F1, F2, F3, F4) are used as input variables for the neural network or networks.

12. Gas turbine,
comprising an apparatus according to Claim 11.

## Revendications

1. Procédé d'analyse du fonctionnement du compresseur (2) à plusieurs étages d'une turbine (1) à gaz ayant une pluralité d'étages de compresseur et/ou de contrôle d'une turbine (1) à gaz,
dans lequel on fait l'apprentissage d'un réseau neuronal ou de plusieurs réseaux neuronaux sur la base du fonctionnement normal de la turbine (1) à gaz, dans lequel :
- on mesure au moins un signal (V5) de pression dynamique par au moins un capteur (8) de pression dans ou sur le compresseur (2) de la turbine (1) à gaz, ainsi qu'un ou plusieurs paramètres (V1, V2, V3, V4) de fonctionnement de la turbine (1) à gaz par un ou par plusieurs autres capteurs (4, 5, 6, 7) alors que la turbine (1) à gaz fonctionne normalement et/ou on entre un signal (V5) de pression dynamique ainsi qu'un ou plusieurs paramètres (V1, V2, V3, V4) de fonctionnement de la turbine à gaz, qui ont été mesurés pendant un fonctionnement normal de la turbine (1) à gaz ;
- on soumet le signal (V5) de pression dynamique à une analyse de fréquence, en déterminant ainsi un paramètre ou plusieurs paramètres du spectre de fréquence du signal (V5) de pression ;
- sur la base du ou des paramètres (V1, V2, V3, V4) de fonctionnement mesurés et du ou des paramètres du spectre de fréquence du signal (V5) de pression, on fait l'apprentissage d'un réseau neuronal ou de plusieurs réseaux neuronaux, qui comprennent comme grandeurs d'entrée le ou les paramètres (V1, V2, V3, V4) de fonctionnement mesurés et le ou les paramètres du spectre de fréquence du signal (V5) de pression et comme grandeurs de sortie au moins une valeur caractéristique de diagnostic, qui représente une mesure de la probabilité que la turbine (1) à gaz soit en fonctionnement normal en fonction des grandeurs d'entrée,
**caractérisé en ce que**
on détermine comme paramètre du spectre de fréquence pour chaque étage du compresseur une bande (F1, F2, F3, F4) de fréquence caractéristique à l'aide de la vitesse de rotation de la turbine à gaz et du nombre des aubes directrices et des aubes mobiles de l'étage de compresseur concerné, et, pour chaque bande de fréquence caractéristique, on calcule la proportion d'énergie, qui y est contenue, du signal (V5) de pression, notamment la valeur de root mean square et/ou le maximum d'amplitude et/ou plusieurs maximums d'amplitude voisins de raies de fréquence au sein de la bande (F1, F2, F3, F4) de fréquence caractéristique pour utilisation comme grandeurs d'entrée du réseau neuronal ou des réseaux neuronaux.

2. Procédé suivant la revendication 1,
dans lequel le réseau neuronal ou les réseaux neuronaux sont des réseaux de fonction à base radiale.

3. Procédé suivant la revendication 1 ou 2,
dans lequel au moins une valeur caractéristique de diagnostic est une valeur de confiance, qui est normée dans une plage de valeurs comprise entre 0 et 1 et qui représente la probabilité qu'une combinaison de paramètres de grandeurs d'entrée soit une combinaison de paramètres connue pendant un fonctionnement normal de la turbine (1) à gaz.

4. Procédé suivant l'une des revendications précédentes,
dans lequel on tient compte comme autre paramètre du spectre de fréquence, en outre, du rapport de la proportion d'énergie d'une bande (F1, F2, F3, F4) de fréquence caractéristique aux proportions d'énergie d'harmoniques de la bande (F1, F2, F3, F4) de fréquence caractéristique pour l'utilisation comme grandeurs d'entrée du réseau neuronal ou des réseaux neuronaux.

5. Procédé suivant l'une des revendications précédentes,
dans lequel, pour chaque étage du compresseur, on fait l'apprentissage d'un réseau neuronal, le réseau neuronal respectif comprenant comme grandeurs d'entrée des paramètres, appartenant à une bande (F1, F2, F3, F4) de fréquence caractéristique, du spectre de fréquence et chaque réseau neuronal ayant une valeur caractéristique de diagnostic comme grandeur de sortie,
cette valeur caractéristique de diagnostic représentant une probabilité de la présence du fonctionnement normal de cet étage de compresseur en fonction des grandeurs d'entrée.

6. Procédé suivant la revendication 5,
dans lequel, sur la base de règles définies à l'avance, notamment sur la base de règles floues, on détermine une valeur caractéristique de diagnostic global à partir des valeurs caractéristiques de diagnostics des étages de compresseurs respectifs.

7. Procédé suivant l'une des revendications précédentes,
dans lequel l'analyse de fréquence effectuée pour le signal (V5) de pression dynamique comprend une transformation de Fourier rapide.

8. Procédé suivant l'une des revendications précédentes,
dans lequel on mesure ou on entre comme paramètres (V1, V2, V3, V4) de fonctionnement un ou plusieurs des paramètres suivants :
- la vitesse de rotation de la turbine (1) à gaz,
- la charge de la turbine (1) à gaz,
- la pression ambiante,
- la température ambiante,
- l'humidité de l'air,
- la position des aubes directrices du compresseur (2) de la turbine (1) à gaz.

9. Procédé suivant la revendication 8,
dans lequel les paramètres (V1, V2, V3, V4) de fonctionnement mesurés et le signal (V5) de pression dynamique proviennent d'un fonctionnement normal, dans lequel la turbine (1) à gaz fonctionne à une vitesse de rotation fixe pour des charges différentes et/ou des positions différentes des aubes directrices.

10. Procédé suivant l'une des revendications 1 à 9,
dans lequel on émet un signal d'alerte si une valeur caractéristique de diagnostic ou plusieurs des valeurs caractéristiques de diagnostic se trouvent en dehors d'une plage de valeurs définie à l'avance.

11. Dispositif pour effectuer le procédé suivant l'une des revendications 1 à 10,
comprenant :
- au moins un capteur (8) de pression pour mesurer au moins un signal (V5) de pression dynamique dans ou sur le compresseur (2) de la turbine (1) à gaz, ainsi qu'un ou plusieurs autres capteurs de mesure d'un ou de plusieurs paramètres (V1, V2, V3, V4) de fonctionnement de la turbine (1) à gaz, alors que la turbine (1) à gaz fonctionne.
- un dispositif d'analyse de fréquence, par lequel on peut soumettre le signal (V5) de pression dynamique à une analyse de fréquence, par laquelle on détermine un paramètre ou plusieurs paramètres du spectre de fréquence du signal (V5) de pression,
- le réseau neuronal ou les réseaux neuronaux ayant subi un apprentissage auxquels on peut envoyer comme grandeurs d'entrée le ou les paramètres (V1, V2, V3, V4) de fonctionnement mesurés et le ou les paramètres du spectre de fréquence du signal (V5) de pression et qui, à partir des grandeurs d'entrée, peuvent émettre au moins une valeur caractéristique de diagnostic, qui représente une mesure de la probabilité que la turbine (1) à gaz est en fonctionnement normal en fonction des grandeurs d'entrée,
**caractérisé en ce que**
comme paramètres du spectre de fréquence pour chaque étage du compresseur, une bande (F1, F2, F3, F4) de fréquence caractéristique est utilisée à l'aide de la vitesse de rotation de la turbine à gaz et du nombre des aubes directrices et des aubes mobiles de l'étage de compresseur concerné et pour chaque bande de fréquence caractéristique est utilisée la proportion d'énergie, qui y est contenue, du signal (V5) de fréquence, notamment la valeur de root mean square et/ou le maximum d'amplitude et/ou plusieurs maximums d'amplitude voisins de raies de fréquence au sein de la bande (F1, F2, F3, F4) de fréquence caractéristique pour l'utilisation comme grandeurs d'entrée du réseau neuronal ou des réseaux neuronaux.

12. Turbine à gaz,
comprenant un dispositif suivant la revendication 11.
